# EUROPÄISCHE PATENTANMELDUNG

(11) **EP 1 914 288 A1**
(43) Veröffentlichungstag der Anmeldung: **23.04.2008**
(21) Anmeldenummer: 06022039.9
(22) Anmeldetag: 20.10.2006
(51) Int. Cl.: C09K 8/36, C09K 8/40, C09K 8/64

(54) **Propylalkylester als Ölphase in Bohrlochbehandlungsmittel**

(71) Anmelder: Cognis Oleochemicals GmbH, 40589 Düsseldorf (DE)
(72) Erfinder: Müller, Heinz, 40789 Monheim (DE); Dierker, Markus, Dr., 40597 Düsseldorf (DE); Maeker, Diana, 40789 Monheim (DE)
(74) Vertreter: Herzog, Martin

(57) **Zusammenfassung**

Beschrieben werden Bohrlochbehandlungsmittel die eine wässerige Phase und eine nichtwässerige Ölphase, Emulgatoren und ggf. weitere übliche Additive, wie beispielsweise Beschwerungsmittel, fluid-loss Additive, viskositätsregulierende Additive, Netzmittel, Salze, Biozide, Korrosionsinhibitoren, und/oder eine Alkalireserve enthalten, wobei die nichtwässerige Phase ganz oder teilweise ausgewählt ist aus Estern des 2-Propylheptanols mit linearen oder verzweigten, gesättigten oder ungesättigten C4-C18-Carbonsäuren - oder C4-C18-Dicarbonsäuren.

## Beschreibung

Die Erfindung beschreibt Bohrlochbehandlungsmittel, die eine wässerige und eine Ölphase enthalten, wobei diese Ölphase besonders niedrige Toxizitätswerte gegenüber marinen Kleinstlebewesen aufweist.

Bohrlochbehandlungsmittel sind alle Arten von Hilfsflüssigkeiten, die bei der Erbohrung von Erdöl- oder Erdgas-Lagerstätten Einsatz finden können. Als charakteristisches Beispiel für solche Behandlungsmittel wird im nachfolgenden die Erfindung anhand von Bohrspülflüssigkeiten und darauf aufgebauten Bohrspülschlämmen beschrieben, die sowohl bei landgestützten als auch bei seegestützten Bohrungen Verwendung finden können. Das Anwendungsgebiet der erfindungsgemäßen Abwandlung von Hilfsflüssigkeiten der hier betroffen Art ist jedoch nicht darauf beschränkt. In Betracht kommen die zahlreichen weiteren Hilfsflüssigkeiten des hier angesprochenen Sachgebiets. Als Beispiele seien benannt Spotting Fluids, Spacer, Packer Fluids, Hilfsflüssigkeiten für Workover und Stimulierung und für das Fracturing. Betroffen sind durch die Erfindung dabei sowohl Hilfsflüssigkeiten der genannten Art, die ölbasiert sind, d.h. mit einer geschlossenen Ölphase arbeiten, als auch Hilfsmittel, in denen die Ölphase in einer insbesondere wässrigen geschlossenen Phase emulgiert ist. Bohrspülflüssigkeiten bzw. darauf aufgebaute Bohrspülschlämme sind charakteristische Beispiele der unterschiedlichen Möglichkeiten.

Bekannt sind einerseits wasserbasierte Bohrspülungen mit einem Gehalt an etwa 1 bis 50% emulgierter Ölphase - neben den anderen üblichen Hilfsstoffen einer solchen Bohrspülung - die auch als O/W-Emulsionsspülungen bezeichnet werden. Auf der anderen Seite sind in breitem Umfang ölbasierte Spülungssysteme im praktischen Einsatz, bei denen das Öl die fließfähige Phase oder doch wenigstens einen substantiellen Anteil der fließfähigen Phase als geschlossene Ölphase bildet. Besondere Bedeutung haben hier die so genannten Invert-Bohrspülschlämme, die auf der Basis W/O-Emulsionen eine disperse wässrige Phase in der geschlossenen Ölphase enthalten. Der Gehalt an disperser wässriger Phase liegt üblicherweise im Bereich von wenigstens etwa 5 bis 10 Gew.-% bis zu etwa 50 bis 60 Gew.-%. Neben diesen W/O-Invert-Bohrspülschlämmen sind aber auch die so genannten true-oil-Muds bekannt, deren Flüssigphase nahezu ausschließlich aus einer geschlossenen Ölphase gebildet ist, die allenfalls geringe Mengen - üblicherweise nicht mehr als etwa 5 bis 10 Gew.-% - an wässriger Phase dispergiert enthalten.

Die nicht-wässerige Phase derartiger Spülungssysteme wird durch die so genannte Trägerflüssigkeit oder englisch "Carrier-Fluid" gebildet. Es handelte sich dabei in der Regel um Dieselöl, welches mit bestimmten Additiven versetzt die eigentliche Bohrspülung bildet. Mit Ende der achtziger Jahre kam aber der Bedarf nach umweltfreundlichen Spülungssystemen und somit Carrier-Fluids auf. Diese sollten insbesondere besser biologisch abbaubar sein, als das bislang eingesetzte Dieselöl. Neben diversen flüssigen Estern, wie sie z.B. in der EP 0 374 672 A1 beschrieben werden, wurden auch olefinische Kohlenwasserstoffe auf ihre Brauchbarkeit hin untersucht. Verwiesen sei hier exemplarisch auf die EP 0 765 368 A1 der Anmelderin, welche die Verwendung von so genannten alpha-Olefinen als Carrier-fluid zum Gegenstand hat.

Nach wie vor besteht aber das Bedürfnis, nach neuen Carrier-Fluids, da die bekannten Verbindungen häufig nicht unter allen Einsatzbedingungen brauchbar sind oder nicht die steigenden Anforderungen an biologisch Abbaubarkeit oder niedriger Toxizität erfüllen. Gerade das letztere Kriterium gewinnt zunehmend an Bedeutung, da immer mehr Bohrungen in ökologisch sensiblen Gebieten niedergebracht werden sollen. Dies gilt besonders bei so genannten off-shore Bohrungen, also Bohrungen, die im Meeresboden niedergebracht werden.

Die Ermittlung der Toxizität einer Spülung erfolgt dabei in der Regel durch biologische Testungen, in denen marine Kleinstlebewesen den Bestandteilen der Spülung in unterschiedlicher Konzentration ausgesetzt werden. Als Indikator für die Toxizität einer Ölphase wird beispielsweise der so genannte Leptocheirus-Test (nach ASTM E 1367 - 92 & EPA/600/R-94/025, Section 11) herangezogen.
Ziel ist es, Spülungssysteme zu finden, die sowohl die physikalisch-technischen Anforderungen erfüllen, als auch eine möglichst geringe Toxizität gegenüber der Umwelt aufweisen. Es sei an dieser Stelle auch auf die physikalischen Belastungen der Bohrspülungen hingewiesen. Die Spülungen werden in großen Täufen auf hohe Temperaturen, d.h. größer als 150°C und insbesondere größer als 200 °C und teilweise auf 250 °C und mehr, erhitzt; es herrschen hohe Drücke vor und dabei müssen die Verbindungen der Spülung gleichzeitig sowohl chemisch stabil bleiben als auch in ihrem Viskositätsverhalten keine starken Veränderung aufweisen und weiterhin auch unter den geschilderten Bedingungen eine stabile Emulsion ausbilden.

Aufgabe der vorliegenden Erfindung war es, Bohrlochbehandlungsmittel, insbesondere Bohrspülungen bereitzustellen, die sowohl in Bezug auf ihre anwendungstechnischen Eigenschaften als auch in Bezug auf die ökologische Verträglichkeit verbessertet sind. Durch Verwendung spezieller Ester konnte diese Aufgabe gelöst werden.

Gegenstand der vorliegenden Anmeldung sind daher Bohrlochbehandlungsmittel, enthaltend eine wässerige Phase und einer nicht-wässerigen Ölphase, Emulgatoren und ggf. weitere übliche Additive, wie beispielsweise Beschwerungsmittel, fluid-loss Additive, viskositätsregulierende Additive, Netzmittel, Salze, Biozide, Korrosionsinhibitoren, und/oder eine Alkalireserve, wobei die nichtwässerige Phase ganz oder teilweise aus Estern des 2-Propylheptanols mit linearen oder verzweigten, gesättigten oder ungesättigten C4-C18-Carbonsäwen - oder C4-C 18-Dicarbonsäuren gebildet wird.

Die speziellen 2-Propylheptanolalkylester der vorliegenden Anmeldung sind Gegenstand der älteren europäischen Patentanmeldung Nr. 05012510.3 (Anmelder: Cognis Deutschland GmbH & Co. KG). Allerdings werden die Ester in dieser Anmeldung nur als Ölkörper für kosmetische Zusammensetzungen offenbart. Die Herstellung dieser Ester erfolgt beispielsweise indem man eine Mischung enthaltend 2-Propylheptanol und n-Hexansäure, n-Octansäure, n-Decanssäure oder n-Dodecansäure, unter Zusatz eines Veresterungskatalysators erhitzt, das entstehende Wasser kontinuierlich abführt und das Rohprodukt danach destilliert.

Das Verfahren kann säurekatalytisch oder basenkatalytisch durchgeführt werden. In einer bevorzugten Ausführungsform wird das Verfahren ohne Zusatz von Lösungsmitteln durchgeführt, vorzugsweise mit Edukten, die möglichst wasserfrei sind.

In einer bevorzugten Ausführungsform des Verfahrens wird ein Zinn-Katalysator einsetzt. Vorzugsweise wird die Veresterung bei Temperaturen zwischen 100-300 °C, insbesondere 200 - 250 °C durchführt. Als Zinn-Katalysatoren geeignet sind beispielsweise Zinnoxalat (z. B. Fascat^{®} 2001), Zinnoxid (SnO, Fascat^{®} 2000) sowie Zinn-IV-Katalysatoren wie Dibutylzinndiacetat Fascat^{®} 4200), Dibutlyzinnoxid (Fascat^{®} 4201), und Dibutylzinnlaurat (Fascat^{®} 4202) oder Zinnoxid (SnO), die ehemals von Atofina und gegenwärtig von Arkema vermarktet werden.

Die erfindungsgemäßen Bohrlochbehandlungsmittel liegen vorzugsweise als Bohrspülungen vor, also als Hilfsmittel für den Erdreichaufschluss durch Erbohren, und hier insbesondere als so genannte Emulsionssysteme, d.h. das eine wässerige und eine Ölphase als Emulsion nebeneinander vorliegen, wobei Emulsionsbohrspülungen des Wasser-in-Öl-Typs (Invert-Systeme) bevorzugt sind. Die Ester können aber auch in reinen Ölspülungen oder in Emulsionsbohrspülungen des Typs Öl-in-Wasser Verwendung finden.

Neben den erfindungsgemäßen Estern des 2-Propylheptanols kann das Bohrlochbehandlungsmittel noch weitere, nicht in Wasser lösliche Bestandteile enthalten, die vorzugsweise ist aus der Gruppe der
a) Paraffine mit 5 bis 22 C-Atomen und/oder,
b) internen Olefine mit 12 bis 30 C-Atomen im Molekül und/oder
c) lineare alpha-Olefine mit einer C-Kettenlänge von größer als 16 und/oder
d) Carbonsäureestern der allgemeinen Formel R-COO-R', in der R für einen linearen oder verzweigten, gesättigten oder ungesättigten Alkylrest mit 15 bis 25 C-Atomen steht und R' einen gesättigten, linearen oder verzweigten Alkylrest mit 3 bis 22 C-Atomen bedeutet, wobei die erfindungsgemäßen Ester des 2-Propylheptanols als Komponente c) ausgeschlossen sind.

Die Ölphasen der erfindungsgemäßen Systeme enthalten zwingend die oben beschriebenen Ester des 2-Propylhetanols und optional aber bevorzugt zusätzlich noch die Komponenten a) und/oder b) alleine oder gemeinsam in Abmischung mit Estern d) sowie ggf. in Abmischung mit anderen geeigneten Ölphasen. Weiterhin bevorzugt ist die Kombination der erfindungsgemäßen Propylester mit der Komponente c) alleine oder die Kombination mit den Komponenten a) und c). Besonders bevorzugt sind solche Bohrlochbehandlungsmittel die als Ölphase Ester von 2-Propylheptanol mit linearen oder verzweigten, gesättigten oder ungesättigten C4-C18 Carbonsäuren enthalten oder daraus bestehen. Weiterhin bevorzugt sind solche Mittel, die als Ölphase die Ester des 2-Propylheptanols mit gesättigten linearen oder verzweigten C4-C 18 Carbonsäuren enthalten oder daraus bestehen. Die Bohrspülungen der vorliegende Erfindung weisen vorzugsweise ein Gewichtsverhältnis zwischen der wässerigen- und der Ölphase von 50 : 50 bis 1 : 99, vorzugsweise 30 : 70 bis 20 : 80 und insbesondere 10 : 90 auf.

### Komponente a)

Als Komponente a) werden erfindungsgemäß lineare oder verzweigte Paraffine mit 5 bis 22 C-Atomen eingesetzt. Paraffine - korrekter bezeichnet als Alkane - sind bekanntermaßen gesättigte Kohlenwasserstoffe, die für die linearen bzw. verzweigten Vertreter der allgemeine Summenformel CₙH₂ₙ₊₁ folgen. Die cyclischen Alkane folgen der allgemeinen Summenformel CₙH₂ₙ. Besonders bevorzugt sind die linearen und verzweigten Paraffine, wohingegen cyclische Paraffine weniger bevorzugt sind. Es kann sogar von Vorteil sein, wenn die Paraffine frei von cyclischen Isomeren sind.
Insbesondere bevorzugt ist die Verwendung von verzweigten Paraffinen. Weiterhin sind solche Paraffine bevorzugt, die bei Raumtemperatur flüssig sind, also solche mit 5 bis 16 C-Atomen pro Molekül. Es kann aber auch bevorzugt sein Paraffine mit 17 bis 22 C-Atome, die eine wachsartige Konsistenz aufweise einzusetzen. Bevorzugt ist es aber, Mischungen der verschiedenen Paraffine einzusetzen, wobei es besonders bevorzugt ist, wenn diese Mischungen bei 21 °C noch flüssig sind. Solche Mischungen können z.B. aus Paraffinen mit 10 bis 21 C-Atomen gebildet werden. Mit Bezug auf die Toxizität, insbesondere beim Leptocheirus plumulosus Test schneiden Paraffine alleine in der Regel nicht ausreichend ab. Typische F-Werte für Paraffine liegen zwischen 2,7 bis 4,53.

### Komponente b)

Als Komponente b) sind interne Olefine (im Weiteren als IO abgekürzt) erfindungsgemäß einsetzbar. Dabei sind IO's ebenfalls an sich bekannte Verbindungen, die durch alle dem Fachmann dazu bekannten Verfahren hergestellt werden können. Die EP 0 787 706 A1 beschreibt z.B. ein Verfahren zur Synthese von IOs durch Isomerisierung von Alpha-Olefinen an Sulfon- oder Persulfonsäuren. Charakteristisch ist, dass die so gewonnen IO linear sind und mindestens eine olefinische Doppelbindung enthalten, die sich nicht in der Alpha-Position der Alkylkette befindet.
Vorzugsweise werden erfindungsgemäß solche IO beziehungsweise IO-Gemische verwendet, welche IO mit 12 bis 30 C-Atomen im Molekül, vorzugsweise mit 14 bis 24 C-Atomen und insbesondere mit bis zu 20 C-Atomen im Molekül enthalten. Vorzugsweise weisen die erfindungsgemäß verwendeten Olefine nur eine olefinische Doppelbindung auf. Beim Leptocheirus-Test werden typischerweise F-Werte zwischen 1,0 und 2,0 erreicht.

### Komponente c)

Bei den linearen alpha-Olefinen (im Weiteren als LAO bezeichnet) handelt es sich um solche Olefine, die in der aplha-Position der linearen Alkylkette eine C-C-Doppelbindung aufweisen. Sie können naturstoffbasiert sein, werden aber insbesondere in großem Umfange auch synthetisch gewonnen. Naturstoffbasierte LAO werden durch Dehydratisierung naturstoffbasierter Fettalkohole als lineare Produkte mit geradkettiger Kohlenstoffzahl gewonnen. Auch die auf synthetischem Wege gewonnenen LAO - hergestellt durch Oligomerisation von Ethylen - enthalten häufig geradkettige Kohlenstoffzahlen in der Kette, es sind heute aber auch Verfahren zur Herstellung von ungeradzahligen alpha-Olefinen bekannt. Geradzahlige LAO können bevorzugte Komponenten der Typs c) sein. Die erfindungsgemäß verwendeten LAO weisen Alkylketten mit mehr als 16 Kohlenstoffatomen auf, und insbesondere den Bereiche von C 18 bis C22, bzw. C 18 bis C20.

### Komponente d)

Weiterhin sind Ester der allgemeinen Formel R-COO-R', in der R für einen linearen oder verzweigten, gesättigten oder ungesättigten Alkylrest mit 15 bis 25 C-Atomen steht und R' einen gesättigten, linearen oder verzweigten Alkylrest mit 6 bis 22 C-Atomen bedeutet, Bestandteil der erfindungsgemäßen Ölphasen. Auch derartige Ester sind bekannte chemische Verbindungen. Deren prinzipielle Verwendung in Bohrspülungen ist z.B. Gegenstand der EP 0 374 672 A1 bzw. der EP 0 374 671 A1. Die Leptocheirus-Werte für Ester liegen typischerweise im Bereich von 0,15 bis 0,4, so dass sich derartige Verbindungen allein bereits zur Ausbildung von niedrigtoxischen Ölphasen eignen können. Allerdings müssen dazu bestimmte Kettenlängen ausgewählt sein. Der Einsatz von Ölphasen, die alleine aus solchen niedrigtoxischen Estern bestehen kann aber aus Kostengründen nachteilig sein. Besonders bevorzugt ist die Verwendung solcher Ester deren Rest R für einen gesättigten oder ungesättigten Alkylrest mit 15 bis 25 und R' für einen gesättigten Alkylrest mit 3 bis 10 C-Atomen steht. Die gesättigten Verbindungen sind dabei im Besonderen bevorzugt. Es ist im Rahmen der erfinderischen Lehre bevorzugt dass in der Ölphase neben den Estern gemäß obiger Beschreibung maximal 15 Gew.-% (bezogen die Ölphase) an anderen Estern mit Resten R, die für Alkylreste mit mehr als 23 C-Atomen stehen, enthalten sind.

Ein weiterer Gegenstand der vorliegenden Erfindung betrifft niedrig-toxische Bohrspülungen, die die erfindungsgemäßen Propylaklyester enthalten. Unter niedrig-toxisch werden hier solche Systeme verstanden, bei denen der Quotient aus der Toxizität der Bestandteile der nicht-wässerigen Phase und der Toxizität von internen Olefinen der Kettenlänge C16/C18 (Standard IO), jeweils gemessen nach dem Leptocheirus plumulosus acute, 10 day sediment toxicity test (nach ASTM E 1367 - 92 & EPA/600/R-94/025, Section 11), kleiner 1 und vorzugsweise kleiner 0,5 insbesondere kleiner 0,2 ist. Ein besonders bevorzugter Bereich für den F-Wert liegt bei 0,1 bis 0,25 und insbesondere bei 0,1 bis 0,15.

Neben den Komponente a) und/oder b) und c) können noch andere, wasserunlösliche Bestandteile in den Ölphasen enthalten sein, sofern diese ökologisch verträglich sind. Weitere besonders geeignete Mischungsbestandteile der erfindungsgemäßen Ölphasen sind daher im Einzelnen:
(i) Ester aus C₁₋₅-Monocarbonsäuren und 1- und/oder mehrfunktionellen Alkoholen, wobei Reste aus 1-wertigen Alkoholen wenigstens 6, bevorzugt wenigstens 8 C-Atome aufweisen und die mehrwertigen Alkohole bevorzugt 2 bis 6 C-Atome im Molekül besitzen,
(ii) Mischungen sekundärer Ester, ausgewählt aus der Gruppe der Propylcarboxylat, Butylcarboxylat, Pentylcarboxylat, Hexylcarboxylat, Heptylcarboxylat, Octylcarboxylat, Nonylcarboxylate, Decylcarboxylat, Undecylcarboxylat, Dodecylcarboxylat, Tridecylcarboxylat, Tetradecylcarboxylat, Pentadecylcarboxylat, Hexadecylcarboxylat, Heptadecylcarboxylat, Octadecylcarboxylat, Nonadecylcarboxylat, Eicosylcarboxylat, Uneicocarboxylat, Doeicosylcarboxylat und Isomeren davon, wobei die sekundären Ester jeweils eine Carboxylat-Rest mit 1 bis 5 C-Atomen aufweisen, wasserunlösliche Ether einwertiger Alkohole mit 6 bis 24 C-Atomen,
(iii) wasserunlösliche Alkohole mit 8 bis 36 C-Atomen
(iv) poly-Alpha-olefine (PAO)
(v) Carbonatester
(vi) Dialkylether
(vii) beliebige Mischungen der Komponenten (i) bis (vi)

Von der Mitverwendung ausgeschlossen sind allerdings lineare alpha-Olefine der Kettenlängen C14/C16 - sofern in diesen Mischungen die Isomere mit einer C-Kettenlänge von C14 als Hauptbestandteil (mindestens 50 Gew.-%) enthalten sind, sowie so genannte *low toxicity* Mineralölen, da diese auch bei erfindungsgemäßer Abmischung mit Estern der Gruppe c) nicht die gewünschten Toxizitätswerte erreichen. Ebenso ist die Mitverwendung von Dieselöl ausgeschlossen. Weiterhin ist die Mitverwendung von Methylestern ausgeschlossen, da diese aufgrund ihrer hohen Toxizität nicht geeignet sind, um niedrig toxische Ölphasen im Sinne der Erfindung auszubilden. Unter bestimmten Bedingungen kann die Mitverwendung von derartigen Bestandteilen allerdings notwendig sein - die dann eingesetzten Mengen liegen aber nicht über 5 Gew.-%, vorzugsweise bei maximal 2 Gew.-%, bezogen auf die Ölphase und typischerweise bei 1 bis 1,5 Gew.-%.

Als weiteren zwingenden Bestandteil enthalten die erfindungsgemäßen Bohrspülungen Emulgatoren. Bei deren Auswahl kommt es entscheidend auf den Spülungstyp an. Für die Praxis brauchbare Emulgatoren zur Ausbildung von W/O-Emulsionen sind insbesondere ausgewählte oleophile Fettsäuresalze, beispielsweise solche auf Basis von Amidoaminverbindungen. Beispiele hierfür werden in der US 4,374,737 und der dort zitierten Literatur beschrieben. Ein häufig verwendetes Produkt dieses Typs ist EZ-MUL^{®} der Fa. Halliburton.
Zur Herstellung von W/O-Emulsionen werden aber noch andere, vorzugsweise nicht-ionische Emulgatoren eingesetzt. Aus dem großen Bereich der nichtionischen Emulgatoren lassen sich erfindungsgemäß besonders geeignete Emulgatoren wenigstens einer der nachfolgenden Stoffklassen zuordnen: (Oligo)-Alkoxylate - insbesondere niedrig-Alkoxylate, wobei hier entsprechenden Ethoxylaten und/oder Propoxylaten besondere Bedeutung zukommt - von lipophile Reste enthaltenden und zur Alkoxylierung befähigten Grundmolekülen natürlichen und/oder synthetischen Ursprungs. Dabei bedeutet niedrig in diesem Zusammenhang Werte von 2 bis 15 und insbesondere 2 bis 10 Teilen Alkoxyd pro Molekül Emulgator. Eine weitere wichtige Klasse nichtionischer Emulgatoren für die Zwecke der Erfindung sind Partialester und/oder Partialether mehrfunktioneller Alkohole mit insbesondere 2 bis 6 C-Atomen und 2 bis 6 OH-Gruppen und/oder deren Oligomere mit lipophile Reste enthaltenden Säuren und/oder Alkoholen. Geeignet sind dabei insbesondere auch Verbindungen dieser Art, die zusätzlich in ihre Molekülstruktur (Oligo)-Alkoxyreste und dabei insbesondere entsprechende Oligo-Ethoxyreste eingebunden enthalten. Ein weiteres Beispiel für entsprechende Emulgatorkomponenten sind Alkyl(poly)glykoside langkettiger Alkohole sowie die bereits benannten Fettalkohole natürlichen und/oder synthetischen Ursprungs beziehungsweise Alkylolamide, Aminoxide und Lecithine. Ohne Anspruch auf Vollständigkeit seien aus den hier aufgezählten Stoffklassen geeigneter Emulgatorkomponenten zusätzlich die folgenden Vertreter benannt: Die (Oligo)-Alkoxylate von lipophile Reste enthaltenden Grundmolekülen können sich insbesondere von ausgewählten Vertretern aus den nachfolgenden Klassen der lipophile Reste enthaltenden Grundmoleküle ableiten: Fettalkohole, Fettsäuren, Fettamine, Fettamide, Fettsäure- und/oder Fettalkoholester und/oder -ether, Alkanolamide, Alkylphenole und/oder deren Umsetzungsprodukte mit Formaldehyd sowie weitere Umsetzungsprodukte von lipophile Reste enthaltenden Trägermolekülen mit niederen Alkoxiden. Beispiele für Partialester und/oder Partialether mehrfunktioneller Alkohole sind insbesondere die entsprechenden Partialester mit Fettsäuren, beispielsweise von der Art der Glycerinmono- und/oder -diester, Glykolmonoester, entsprechende Partialester oligomerisierter mehrfunktioneller Alkohole, Sorbitanpartialester und dergleichen sowie entsprechende Verbindungen mit Ethergruppierungen. Verwiesen wird hierbei auf die konkrete Offenbarung der WO 98/18881 der Anmelderin, und zwar auf die Beschreibung auf den Seiten 28 bis 30, die Angaben zu unterschiedlichen Emulgatoren macht, die auch im Sinne der vorliegenden Lehre vorteilhaft einzusetzen sind.

Vorzugsweise werden die Ölphasen gebildet, die neben den Propylestern noch Mischungen der Komponenten a) und/oder b) mit den Esterölen c) im Gewichtsverhältnis von 10 : 1 bis 1 : 1, vorzugsweise von 5 : 1 bis 1 : 1 und insbesondere von 3 : 1 bis 1 : 1 enthalten, um z.B. die gewünschte relative Toxizität zu erreichen.

Es kann vorteilhaft sein, dass die nicht-wässerige Ölphase der erfindungsgemäßen Mittel zu 100 Gew.-% aus Abmischungen der erfindungsgemäßen Propylester sowie ggf. der Komponenten a) und/ oder b) und/oder c) bzw. d) besteht. Weiterhin kann es vorteilhaft sein, wenn nur Mischungen aus den Propylestern mit a) und d), vorzugsweise nur c) und/oder d) in den Ölphasen die erfindungsgemäßen Mittel enthalten sind.

Soweit ist es im Rahmen der vorliegenden Lehre bevorzugt, dass die Propylester nur einen untergeordneten Anteil der Ölphase ausmachen, und vorzugsweise in Mengen von 1 bis 50 Gew.-%, insbesondere in Mengen von 10 bis 45 Gew.-% und besonders bevorzugt in Mengen von 15 bis 35 Gew.-% in der Ölphase enthalten sind. Besonders bevorzugte Ölphasen, bei denen die Propylheptylester Mengen von 50 Gew.-% und weniger vorliegen sind Abmischungen der Propylester mit IO's, also der Komponente b) der obigen Beschreibung. Hierbei können Abmischungen von Propylestern mit IOs im Gewichtsverhältnis von 1 : 10 bis 1 : 1 und insbesondere 1 : 3 bis 1 : 5 vorteilhaft sein.

Es ist aber ebenso eine bevorzugte Ausführungsform, dass die Ölphase zu mindestens 50 Gew.-%, vorzugsweise zu mindestens 80 Gew.-% und insbesondere zu mindestens 90 Gew.-% aus Estern des 2-Propylheptanols in Abmischung, alleine oder kombiniert, mit linearen oder verzweigten, gesättigten oder ungesättigten C4-C18-Carbonsäuren - oder C4-C18-Dicarbonsäuren besteht.

Die Ölphasen der erfindungsgemäßen Mittel weisen vorzugsweise Pourpoints unterhalb 0°C, vorzugsweise unterhalb -5°C (gemessen nach DIN ISO 3016: 1982-10) auf. Die Brookfield-Viskosität der Ölphasen beträgt bei 0° C vorzugsweise höchstens 50 mPas. Die erfindungsgemäßen Bohrlochbehandlungsmittel weisen, sofern sie als ölbasierte Bohrspülung vom W/O-Typ ausgebildet sind, vorzugsweise eine plastische Viskosität (PV) im Bereich von 10 bis 100 mPas. Vorzugsweise werden Viskositäten im Bereich von 15 bis 70 mPas eingestellt. Die Fließgrenze (Yield-Point YP) liegt vorzugsweise bei 5 bis 60 1b/100 ft², jeweils bestimmt bei 50 °C. Die kinematische Viskosität der Ölphase gemessen nach Ubbelohde bei 20 °C sollte vorzugsweise höchstens 20 mm²/sec und vorzugsweise höchstens 12 mm²/sec betragen. Die wässerige Phase der erfindungsgemäßen Mittel weist vorzugsweise einen pH-Wert im Bereich von 7,5 bis 12, vorzugsweise von 7,5 bis 11 und insbesondere von 8 bis 10 auf

Neben den oben aufgeführten Bestandteilen, enthalten die erfindungsgemäßen Mittel noch Additive, beispielsweise Beschwerungsmittel, fluid-loss Additive, viskositätsregulierende Additive, Netzmittel, Salze, Biozide, Korrosionsinhibitoren, und/oder eine Alkalireserve. Es gelten hier die allgemeinen Gesetzmäßigkeiten für die Zusammensetzung der jeweiligen Behandlungsflüssigkeiten, für die im nachfolgenden anhand entsprechender Bohrspülschlämme beispielhafte Angaben gemacht werden. Die Additive können wasserlöslich, öllöslich und/oder wasser- bzw. öl-dispergierbar sein.

Klassische Additive können sein: fluid-loss-Additive, Strukturviskosität aufbauende lösliche und/oder unlösliche Stoffe, Alkalireserven, Mittel zur Inhibierung des unerwünschten Wasseraustausches zwischen erbohrten Formationen - z. B wasserquellbare Tone und/oder Salzschichten - und der z. B. wasserbasierten Spülflüssigkeit, Netzmittel zum besseren Aufziehen der emulgierten Ölphase auf Feststoffoberflachen, z. B. zur Verbesserung der Schmierwirkung, aber auch zur Verbesserung des oleophilen Verschlusses freigelegter Gesteinsformationen, bzw. Gesteinsflächen, Biozide, beispielsweise zur Hemmung des bakteriellen Befalls von O/W-Emulsionen und dergleichen.

Nur auszugsweise sei dementsprechend zitiert: Feindisperse Zusatzstoffe zur Erhöhung der Spülungsdichte: Weit verbreitet ist das Bariumsulfat (Baryt), aber auch Calciumcarbonat (Calcit) oder das Mischcarbonat von Calcium und Magnesium (Dolomit) finden Verwendung.

Mittel zum Aufbau der Strukturviskosität, die gleichzeitig auch als fluid-loss-Additive wirken: In erster Linie ist hier Bentonit bzw. hydrophobierter Bentonit zu nennen. Für Salzwasserspülungen kommt anderen vergleichbaren Tonen, insbesondere Attapulgit und Sepiolith in der Praxis beträchtliche Bedeutung zu. Auch der Mitverwendung organischer Polymerverbindungen natürlichen und/oder synthetischen Ursprungs kann beträchtliche Bedeutung in diesem Zusammenhang zukommen. Zu nennen sind hier insbesondere Stärke oder chemisch modifizierte Stärken, Cellulosederivate wie Carboxymethylcellulose, Guargum, Synthangum oder auch rein synthetische wasserlösliche und/oder wasserdispergierbare Polymerverbindungen, insbesondere von der Art der hochmolekularen Polyacrylamidverbindungen mit oder ohne anionische bzw. kationische Modifikation.

Verdünner zur Viskositätsregulierung: Die so genannten Verdünner können organischer oder anorganischer Natur sein, Beispiele für organische Verdünner sind Tannine und/oder Qebracho-Extrakt. Weitere Beispiele hierfür sind Lignit und Lignitderivate, insbesondere Lignosulfonate. Besonders bevorzugt sind aber die organischen Verdünner gemäß der Lehre der WO02/053675 bzw. der WO 95/053676.

Den unerwünschten Wasseraustausch mit beispielsweise Tonen inhibierende Zusatzstoffe: In Betracht kommen hier die aus dem Stand der Technik zu öl- und wasserbasierten Bohrspülungen bekannten Zusatzstoffe. Insbesondere handelt es sich dabei um Halogenide und/oder Carbonate der Alkali- und/oder Erdalkalimetalle, wobei entsprechenden Kaliumsalzen gegebenenfalls in Kombination mit Kalk besondere Bedeutung zukommen kann.

Alkalireserven: In Betracht kommen hier auf das Gesamtverhalten der Spülung abgestimmte anorganische und/oder organische Basen, insbesondere entsprechende basische Salze bzw. Hydroxide von Alkali- und/oder Erdalkalimetallen sowie organische Basen. Besonders bevorzugt ist hier die Verwendung von Kalk (Ca(OH)₂) als Alkalireserve. Typische Gehalte von Kalk in den Bohrspülung liegen zwischen 1 und 6 lb/bbl, vorzugsweise zwischen 1 und 4 lb/bbl, wobei es entscheiden auf die Art und Zusammensetzung der Ölphase ankommt, welchen Mengen verwendet werden können. Art und Menge dieser basischen Komponenten sind vorzugsweise so gewählt und aufeinander abgestimmt, dass im Falle von hydrolyseanfälligen Estern, insbesondere ungesättigten Estern der Kohlenstoffzahl C-16 bis C-24 keine übermäßige Hydrolyse auftritt, da die entstehenden Reaktionsprodukte, insbesondere die Fettsäuren, die Stabilität der Emulsionsbohrspülung beeinträchtigen können. Es ist in diesen Fällen bevorzugt, eine Alkalireserve in der Spülung bereitzustellen, die maximal einer Konzentration von 2,0 lb/bbl der basischen Komponente, vorzugsweise von Kalk in der Spülung unter Arbeitsbedingungen entspricht und vorzugsweise darunter liegen kann, wobei typische Werte im Bereich von 1,0 bis 1,9 bzw. 1,2 bis 1,8 lb/bbl liegen können. Auf dem Gebiet der organischen Basen ist begrifflich zu unterscheiden zwischen wasserlöslichen organischen Basen - beispielsweise Verbindungen vom Typ des Diethanolamins - und praktisch wasserunlöslichen Basen ausgeprägt oelophilen Charakters. Gerade die Mitverwendung auch solcher öllöslichen Basen im Rahmen der vorliegenden Erfindung fällt in die Lehre. Oleophile Basen dieser Art, die sich insbesondere durch wenigstens einen längeren Kohlenwasserstoffrest mit beispielsweise 8 bis 36 C-Atomen auszeichnen, sind dann allerdings nicht in der wässrigen Phase sondern in der Ölphase gelöst. Die Menge der jeweils eingesetzten Hilfs- und Zusatzstoffe bewegt sich grundsätzlich im üblichen Rahmen und kann damit der zitierten einschlägigen Literatur entnommen werden.

Eine besondere Ausführungsform betrifft solche Bohrspülungen, enthaltend eine wässerige Phase und einer nicht-wässerigen Ölphase, Emulgatoren und ggf. weitere übliche Additive, wie beispielsweise Beschwerungsmittel, fluid-loss Additive, viskositätsregulierende Additive, Netzmittel, Salze, Biozide, Korrosionsinhibitoren, und/oder eine Alkalireserve, wobei die nichtwässerige Phase zu mehr als 50 Gew.-% Ester des 2-Propylheptanols mit linearen oder verzweigten, gesättigten oder ungesättigten C4-C18-Carbonsäuren - oder C4-C18-Dicarbonsäuren enthält und die Ölphase der Bohrspülung eine relative Toxizität, also dem Quotient aus der Toxizität von internen Olefinen der Kettenlänge C16/C18 (Standard IO) und der Toxizität der Bestandteile der nicht-wässerigen Phase, jeweils gemessen nach dem Leptocheirus plumulosus acute, static 96-hour/10 day sediment toxicity test (nach ASTM E 1367 - 92 & EPA/600/R-94/025, Section 11), von kleiner als 1 aufweist.

Die Ölphasen der vorliegenden Erfindung sind geeignet um Bohrspülmittel, insbesondere Emulsionsbohrspülungen zu erhalten, die sich auch bei hohen Arbeitstemperaturen (größer als 200 °C) stabil verhalten und trotzdem die hohen Anforderungen an Toxizität und biologische Abbaubarkeit erfüllen. Dies gilt, wie oben für die Bohrspülungen ausgeführt, auch zur Herstellung von niedrig-toxischen Ölphasen, die den genannten Leptocheirus-Test (nach ASTM E 1367 - 92 & EPA/600/R-94/025, Section 11) bestehen können. Solche Spülungssysteme werden insbesondere bei Off-shore Bohrungen, z.B. im Golf von Mexiko benötigt, um auch bei tiefen Bohrungen noch eine ausreichende Schmierung der Bohrgeräte zu erreichen. Weiterhin muss die Bohrspülung auch das Bohrklein an die Oberfläche transportieren, was ebenfalls eine intakte Emulsion voraussetzt.

Die Verwendung der Ester des 2-Propylheptanols mit linearen oder verzweigten, gesättigten oder ungesättigten C4-C18-Carbonsäuren - oder C4-C18-Dicarbonsäuren zur Herstellung von Bohrspülungen, insbesondere von Emulsionsbohrspülungen und vorzugsweise von Emulsionsbohrspülungen des Typs Wasser-in-Öl, ist ein weiterer Gegenstand der vorliegenden Erfindung. Des weiteren können die erfindungsgemäßen Ester auch in anderen Bohrlochbehandlungsmitteln vorteilhafter weise verwendet werden, beispielsweise auch in Bohrlochreinigungsmitteln, oder als Spotting Fluids, Spacer, Packer Fluids, Hilfsflüssigkeiten für Workover und Stimulierung und für das Fracturing.

### Beispiele

### Beispiel 1: Herstellung von Propylheptylcaprylat

Es werden 158,3 g 2-Propylheptanol (1 Mol) und 144,2 g Caprylsäure (1 Mol) zusammen mit 0,30g Fascat^{®} 2001 (Sn-Oxalat: 0,1 Gew.-% bezogen auf die Gesamtzusammensetzung) 5h auf 220°C am Wasserabscheider erhitzt. Nach Beendigung der Wasserabscheidung wird das Rohprodukt im Ölpumpenvakuum über eine 250 mm Vigreuxkolonne destilliert (T = 92-94 °C). Man erhält 282,4 g eines farblosen Öls: OHZ=< 1 SZ=<0,1.

### Beispiel 2: Herstellung von Propylheptylcapronat

Es werden 158,3 g 2-Propylheptanol (1 Mol) und 116,2 g Capronsäure (1 Mol) zusammen mit 0,27g Fascat^{®} 2001 (Sn-Oxalat) (0,1 Gew.-% bezogen auf die Gesamtzusammensetzung) 4 h auf 220°C am Wasserabscheider erhitzt. Nach Beendigung der Wasserabscheidung wird das Rohprodukt im Ölpumpenvakuum über eine 250 mm Vigreuxkolonne destilliert (T = 111-126 °C). Man erhält 251,4 g eines farblosen Öls: OHZ= < 1 SZ=<0,1.

### Beispiel 3: Herstellung von Propylheptylcaprinat

Es werden 1108,0 g 2-Propylheptanol (7 Mol) und 1205,9 g Caprinsäure (7 Mol) zusammen mit 0,27 g Fascat^{®} 2001 (Sn-Oxalat) (0,1 % Gew.-% bezogen auf die Gesamtzusammensetzung) 6 h auf 220 °C am Wasserabscheider erhitzt. Nach Beendigung der Wasserabscheidung wird das Rohprodukt im Ölpumpenvakuum über eine 250 mm Vigreuxkolonne destilliert (T = 141-152 °C). Man erhält 1840,1 g eines farblosen Öls: OHZ= < 0,08 SZ=<0,18.

### Beispiel 4: Anwendungstechnische Untersuchungen

Es wurden zwei W/O-Invertbohrspülungen aus den folgenden Inhaltsstoffen hergestellt:

| **Ester** | **bbl** | **0,707** |
|---|---|---|
| Emulgator | lb | 23,9 |
| Fluid loss additive | lb | 12,9 |
| Lime (Ca(OH)₂ | lb | 1 |
| Verdicker | lb | 4,8 |
| Wasser | bbl | 0,301 |
| Calciumchloride | lb | 33,9 |
| Bariumsulfat | lb | 210,8 |
| Seewasser | bbl | 0,1 |

Als Ölphase kam einmal ein üblicher Ester (Octansäure-2-ethylhexylester Petrofree^{®} LV, Hersteller: Fa. Cognis Oleochemicals - Spülung 2) zum Einsatz der verglichen wurde mit einem erfindungsgemäßen Propylheptylester, hier konkret dem 2-Propylheptylcaprylat (Spülung 1). Erschwerend kam hinzu, dass die Spülung mit Seewasser kontaminiert worden war.
In den folgenden Tabellen sind die rheologischen Kenndaten jeweils vor (Before hot rolling, BHR) und nach (After hot rolling, AHR) 16 h Alterung der Spülungen bei 250 °F (122 °C) aufgeführt. Gemessen wurden außerdem die elektrische Stabilität, die plastische Viskosität, die Gelstärke sowie der high-temperature-high-pressure Wert (HTHP). Die Messungen der rheologischen Daten erfolgte immer gemäß dem API bulletin RP 13 B-2.

Es gelten dabei die folgenden Umrechnungsfaktoren:
1 lb = 0,45 kg; 1 bbl = 1591; 1 bl/bbl = 2,85 kg/m³;
1 lb/100 ft² = 0,48 Pa s; 1 cP = 1 Pa s.
1 °C = 33,80 °F; 1 gal = 3,791.

Außerdem wurden die Ergebnisse des sog. Leptocheirus-Test (nach ASTM E 1367 - 92 & EPA/600/R-94/025, Section 11) als F-Wert (= Quotient aus der Toxizität der Bestandteile der nicht-wässerigen Phase und der Toxizität von internen Olefinen der Kettenlänge C16/C18 (Standard IO)) wiedergegeben. Der F-Wert sollte kleiner sein als 1, wenn eine niedrigtoxische Spülung vorliegen soll. Je kleiner der F-Wert, desto niedriger die Toxizität. Der F-Wert für das 2-Propylheptylcaprylat beträgt 0,10, wohingegen der Vergleichsester den Wert 0,16 erreicht.

Das Öl/Wasser-Verhältnis betrug 70 : 30; das so genannte mud-Gewicht betrug 11 lb/gal.

**Tabelle 1**

| | | **1** | | **2** | |
|---|---|---|---|---|---|
| | | **BHR** | **AHR** | **BHR** | **AHR** |
| **Elektrische Stabilität** | V | 450 | 160 | 410 | 270 |
| **Plastische Viskosität** | cP | 37 | 29 | 39 | 37 |
| **Gelstärke** | lb/100 ft² | 17 | 6 | 37 | 32 |
| **Gelstärke 10"/10'** | lb/100 ft² | 8/8 | 5/6 | 17/18 | 14/15 |
| **HTHP total** | ml | | 4 | | 3 |
| **HTHP water** | ml | | - | | - |
| **HTHP oil** | ml | | 4 | | 3 |
| HTHP temp. | °F | | 250 | | 250 |

Die erfindungsgemäße Spülung 1 zeigt ein besseres rheologisches Profil, insbesondere was die Gelstärke angeht, als die Standardspülung, bei gleichzeitig besserem F-Wert der Ölphase.

In einem weiteren Versuch wurde eine Spülung getestet, die als Ölphase eine Abmischung aus einem Standardester (Petrofree^{®} LV, Spülung 3) oder dem 2-Propylheptylcaprylat (Spülung 4) in Abmischung mit einem internen Olefin enthielt. Das Öl/Wasser-Verhältnis betrug 70 : 30 und das mud-Gewicht betrug 14 1b/gal. Das Gewichtsverhältnis von IO zu Estern innerhalb der nicht-wässerigen Phase betrug 80 : 20.

| **Ester** | **bbl** | **0,707** |
|---|---|---|
| IO | bbl | 0,099 |
| Emulgator | lb | 10,0 |
| Lime (Ca(OH)₂ | lb | 0,2 |
| Verdicker | lb | 1,0 |
| Wasser | bbl | 0,223 |
| Calciumchloride | lb | 27,2 |
| Bariumsulfat | lb | 314 |

Die Ergebnisse der rheologischen Prüfungen vor- und nach Alterung finden sich in der folgende

**Tabelle 2:**

| | | **3** | | **4** | |
|---|---|---|---|---|---|
| | | **BHR** | **AHR** | **BHR** | **AHR** |
| **Elektrische Stabilität** | V | 510 | 480 | 800 | 650 |
| **Plastische Viskosität** | cP | 21 | 22 | 20 | 20 |
| **Gelstärke** | lb/100 ft² | 10 | 7 | 14 | 11 |
| **Gelstärke 10"/10'** | lb/100 ft² | 4/4 | 4/5 | 5/5 | 4/6 |
| **HTHP total** | ml | | 0,8 | | 0,8 |
| **HTHP water** | ml | | - | | - |
| **HTHP oil** | ml | | 0,8 | | 0,8 |
| HTHP temp. | °F | | 250 | | 250 |

## Patentansprüche

**1.** Bohrlochbehandlungsmittel, enthaltend eine wässerige Phase und einer nicht-wässerigen Ölphase, Emulgatoren und ggf. weitere übliche Additive, wie beispielsweise Beschwerungsmittel, fluid-loss Additive, viskositätsregulierende Additive, Netzmittel, Salze, Biozide, Korrosionsinhibitoren, und/oder eine Alkalireserve, wobei die nichtwässerige Phase ganz oder teilweise ausgewählt ist aus Estern des 2-Propylheptanols mit linearen oder verzweigten, gesättigten oder ungesättigten C4-C18-Carbonsäuren - oder C4-C 18-Dicarbonsäuren.

**2.** Bohrlochbehandlungsmittel, nach Anspruch 1, **dadurch gekennzeichnet, dass** sie als Wasser-in-Öl (W/O) Emulsion vorliegen.

**3.** Bohrlochbehandlungsmittel nach den Ansprüchen 1 bis 2, **dadurch gekennzeichnet, dass** es als Bohrspülung ausgestaltet ist.

**4.** Bohrlochbehandlungsmittel nach den Ansprüchen 1 bis 3, **dadurch gekennzeichnet, dass** das Gewichtsverhältnis zwischen der wässerigen- und der Ölphase 50 : 50 bis 1 : 99, vorzugsweise 30 : 70 bis 20 : 80 und insbesondere 10 : 90 beträgt.

**5.** Bohrlochbehandlungsmittel nach den Ansprüchen 1 bis 4, **dadurch gekennzeichnet, dass** die Ölphase zu mindestens 50 Gew.-%, vorzugsweise zu mindestens 80 Gew.-% und insbesondere zu mindestens 90 Gew.-% aus Estern des 2-Propylheptanols mit linearen oder verzweigten, gesättigten oder ungesättigten C4-C18-Carbonsäuren - oder C4-C 18-Dicarbonsäuren besteht.

**6.** Bohrlochbehandlungsmittel nach den Ansprüchen 1 bis 5, **dadurch gekennzeichnet, dass** als Ölphase Ester von 2-Propylheptanol mit linearen oder verzweigten, gesättigten oder ungesättigten C4-C 18 Carbonsäuren ausgewählt sind.

**7.** Bohrlochbehandlungsmittel nach den Ansprüchen 1 bis 6, **dadurch gekennzeichnet, dass** als Ölphase die Ester des 2-Propylheptanols mit gesättigten linearen oder verzweigten C4-C 18 Carbonsäuren ausgewählt sind.

**8.** Bohrlochbehandlungsmittel nach einem der Ansprüche 1 bis 7, **dadurch gekennzeichnet, dass** die Ölphase neben den Estern des 2-Propylheptanols noch weitere Bestanteile enthält, ausgewählt aus den Klassen
a) Paraffine mit 5 bis 22 C-Atomen und /oder
b) internen Olefine mit 12 bis 30 C-Atomen im Molekül und/oder
c) lineare alpha-Olefine mit einer C-Kettenlänge von größer 16 und/oder
d) Carbonsäureestern der allgemeinen Formel R-COO-R', in der R für einen linearen oder verzweigten, gesättigten oder ungesättigten Alkylrest mit 15 bis 25 C-Atomen steht und R' einen gesättigten, linearen oder verzweigten Alkylrest mit 3 bis 22 C-Atomen bedeutet, wobei das Isomere mit R' = 2-Propylheptanol ausgeschlossen ist.

**8.** Bohrlochbehandlungsmittel nach den Ansprüchen 1 bis 7, **dadurch gekennzeichnet, dass** die Komponente a) ausgewählt ist aus der Gruppe der linearen oder verzweigten Paraffine mit 10 bis 21 C-Atomen, wobei verzweigte Paraffine besonders bevorzugt sind.

**9.** Bohrlochbehandlungsmittel nach einem der Ansprüche 1 bis 8, **dadurch gekennzeichnet, dass** die Komponente b) ausgewählt ist aus der Gruppe der internen Olefine mit 12 bis 30 C-Atomen, vorzugsweise 14 bis 24 und insbesondere mit bis zu 20 C-Atomen.

**10.** Bohrlochbehandlungsmittel nach den Ansprüchen 1 bis 9, **dadurch gekennzeichnet, dass** die Komponente d) ausgewählt ist aus Estern der Formel R-COOR' gemäß der Definition im Anspruch 7, in denen R für gesättigte oder ungesättigte lineare Alkylreste mit 15 bis 23 C-Atomen steht und R' einen linearen oder verzweigten, gesättigten Alkylrest mit 6 bis 22 C-Atomen bedeutet.

**11.** Bohrlochbehandlungsmittel nach den Ansprüchen 1 bis 10, **dadurch gekennzeichnet, dass** neben den Estern vom Typ d) maximal 15 Gew.-% (bezogen auf die Ölphase) an Estern mit Resten R, die für Alkylreste mit mehr als 23 C-Atomen stehen, enthalten sind.

**12.** Bohrlochbehandlungsmittel nach den Ansprüchen 1 bis 11, **dadurch gekennzeichnet, dass** als weitere Komponente Ester aus C1-C5 Monocarbonsäuren mit 1- und/oder mehrfunktionellen Alkoholen Verwendung finden, wobei die Alkohole mindestens 6, vorzugsweise mindestens 8 C-Atome und die mehrwertigen Alkohole 2 bis 6 C-Atome im Molekül aufweisen.

**13.** Bohrlochbehandlungsmittel nach den Ansprüchen 1 bis 12, **dadurch gekennzeichnet, dass** als weitere Komponente Mischungen sekundärer Ester, ausgewählt aus der Gruppe der Propylcarboxylat, Butylcarboxylat, Pentylcarboxylat, Hexylcarboxylat, Heptylcarboxylat, Octylcarboxylat, Nonylcarboxylate, Decylcarboxylat, Undecylcarboxylat, Dodecylcarboxylat, Tridecylcarboxylat, Tetradecylcarboxylat, Pentadecylcarboxylat, Hexadecylcarboxylat, Heptadecylcarboxylat, Octadecylcarboxylat, Nonadecylcarboxylat, Eicosylcarboxylat, Uneicocarboxylat, Doeicosylcarboxylat und Isomeren davon, wobei die sekundären Ester jeweils einen Carboxylat-Rest mit 1 bis 5 C-Atomen aufweisen, in der nichtwässerigen Ölphase enthalten sind.

**14.** Bohrlochbehandlungsmittel nach den Ansprüchen 1 bis 13, **dadurch gekennzeichnet, dass** die nichtwässerige Ölphase einen Pourpoint unterhalb 0°C, vorzugsweise unterhalb -5 °C aufweist.

**15.** Bohrlochbehandlungsmittel nach den Ansprüchen 1 bis 14, **dadurch gekennzeichnet, dass** es als ölbasierte Bohrspülung vom W/O-Typ eine plastische Viskosität (PV) im Bereich von 10 bis 70 mPas und eine Fließgrenze (Yield-Point YP) von 5 bis 60 1b/100 ft² jeweils bestimmt bei 50 °C, aufweist, **dadurch gekennzeichnet, dass** die nichtwässerige Ölphase eine Brookfield-Viskosität, bei 0 °C von höchstens 50 mPas aufweist.

**16.** Bohrlochbehandlungsmittel nach den Ansprüchen 1 bis 15, **dadurch gekennzeichnet, dass** es als ölbasierte Bohrspülung vom W/O-Typ eine plastische Viskosität (PV) im Bereich von 10 bis 70 mPas und eine Fließgrenze (Yield-Point YP) von 5 bis 60 1b/100 ft² jeweils bestimmt bei 50° C, aufweist.

**17.** Bohrlochbehandlungsmittel nach den Ansprüchen 1 bis 16, **dadurch gekennzeichnet, dass** die Ölphase eine Viskosität nach Ubbelohde bei 20 °C von maximal 12 mm²/sec aufweist.

**18.** Bohrlochbehandlungsmittel nach den Ansprüchen 1 bis 17, **dadurch gekennzeichnet, dass** die wässerige Phase einen pH-Wert im Bereich von 7,5 bis 12, vorzugsweise von 7,5 bis 11 und insbesondere von 8 bis 10 aufweist.

**19.** Verwendung von Estern des 2-Propylheptanols mit linearen oder verzweigten, gesättigten oder ungesättigten C4-C18-Carbonsäuren - oder C4-C18-Dicarbonsäuren zur Herstellung von Bohrspülungen, insbesondere zur Herstellung von Emulsionsbohrspülungen und vorzugsweise von Emulsionsbohrspülungen des Typs Wasser-in-Öl.

**20.** Verwendung nach Anspruch 19, **dadurch gekennzeichnet, dass** zusätzlich Abmischungen aus a) linearen oder verzweigten Paraffinen mit 10 bis 22 C-Atomen und/oder b) internen Olefinen mit 12 bis 30 C-Atomen im Molekül mit c) Carbonsäureester der allgemeinen Formel R-COO-R' gemäß der Definition im Anspruch 7, in der R für einen linearen oder verzweigten, gesättigten oder ungesättigten Alkylrest mit 15 bis 25 C-Atomen steht und R' einen gesättigten, linearen oder verzweigten Alkylrest mit 3 bis 22 C-Atomen bedeutet, mit verwendet werden.

**21.** Verwendung von Estern des 2-Propylheptanols mit linearen oder verzweigten, gesättigten oder ungesättigten C4-C18-Carbonsäuren - oder C4-C18-Dicarbonsäuren als alleiniger Bestandteil, oder Mischungsbestandteil, der Ölphase in InvertBohrspülungen zur Verringerung der Toxizität der Ölphase der InvertBohrspülungen, gemessen nach dem Leptocheirus plumulosus acute, 10 day sediment toxicity test (nach ASTM E 1367 - 92 & EPA/600/R-94/025, Section 11).

**22.** Bohrspülung, enthaltend eine wässerige Phase und einer nicht-wässerigen Ölphase, Emulgatoren und ggf. weitere übliche Additive, wie beispielsweise Beschwerungsmittel, fluid-loss Additive, viskositätsregulierende Additive, Netzmittel, Salze, Biozide, Korrosionsinhibitoren, und/oder eine Alkalireserve, wobei die nichtwässerige Phase zu mehr als 50 Gew.-% Ester des 2-Propylheptanols mit linearen oder verzweigten, gesättigten oder ungesättigten C4-C18-Carbonsäuren - oder C4-C18-Dicarbonsäuren enthält und die Ölphase der Bohrspülung eine relative Toxizität, also dem Quotient aus der Toxizität von internen Olefinen der Kettenlänge C16/C18 (Standard IO) und der Toxizität der Bestandteile der nicht-wässerigen Phase, jeweils gemessen nach dem Leptocheirus plumulosus acute, 10 day sediment toxicity test (nach ASTM E 1367 - 92 & EPA/600/R-94/025, Section 11), von kleiner als 1 aufweist.

**23.** Verwendung von Estern des 2-Propylheptanols mit linearen oder verzweigten, gesättigten oder ungesättigten C4-C18-Carbonsäuren - oder C4-C18-Dicarbonsäuren als Bestandteil von Bohrlochbehandlungsmitteln, insbesondere von Bohrspülmitteln, Bohrlochreinigern, Spotting Fluids, Spacer, Packer Fluids, Hilfsflüssigkeiten für Workover und Stimulierung und für das Fracturing.
